# EUROPÄISCHE PATENTANMELDUNG

(11) **EP 3 929 364 A1**
(43) Veröffentlichungstag der Anmeldung: **29.12.2021**
(21) Anmeldenummer: 21179933.3
(22) Anmeldetag: 17.06.2021
(51) Int. Cl.: E03C 1/04, F16K 11/00

(54) **THERMOSTATMISCHARMATUR UND VERFAHREN ZUR DEREN HERSTELLUNG**

(30) Priorität: 26.06.2020 DE 102020116977
(71) Anmelder: Grohe AG, 58675 Hemer (DE)
(72) Erfinder: PHILIPPS, Hartwig, 58706 Menden (DE); MENGES, Sascha, 58675 Hemer (DE); VÖLLER, Martin, 58675 Hemer (DE); LUIG, Frank-Thomas, 58708 Menden (DE)

(57) **Zusammenfassung**

Thermostatmischarmatur (1), zumindest aufweisend:
- ein Armaturengehäuse (2) mit einem ersten Zulauf (3) für eine erste Flüssigkeit und einem zweiten Zulauf (4) für eine zweite Flüssigkeit,
- einen Thermostatmischer (5) zum Mischen der ersten Flüssigkeit und der zweiten Flüssigkeit zu einem Mischwasser;
- einen ersten Flüssigkeitskanal (6), mittels dem die erste Flüssigkeit von dem ersten Zulauf (3) zu dem Thermostatmischer (5) führbar ist; und
- einen zweiten Flüssigkeitskanal (7), mittels dem die zweite Flüssigkeit von dem zweiten Zulauf (4) zu dem Thermostatmischer (5) führbar ist, wobei der zweite Flüssigkeitskanal (7) zumindest teilweise von einem Ring (8) umgeben ist, der einen Kontakt der zweiten Flüssigkeit mit dem Armaturengehäuse (2) verhindert.

Zudem wird auch ein Verfahren zur Herstellung einer solchen Thermostatmischarmatur (1) vorgeschlagen.

## Beschreibung

Die vorliegende Erfindung betrifft eine Thermostatmischarmatur sowie ein Verfahren zur deren Herstellung. Mittels der Thermostatmischarmatur ist Mischwasser mit einer gewünschten Mischwassertemperatur insbesondere an Waschbecken, Spülbecken, Duschen und/oder Badewannen bereitstellbar.

Thermostatmischarmaturen weisen regelmäßig ein Armaturengehäuse auf, in dem komplexe Flüssigkeitskanäle für Warmwasser und Kaltwasser ausgebildet sind. Über die Flüssigkeitskanäle sind das Warmwasser und Kaltwasser einem Thermostatmischer zuführbar. Beim Durchströmen der Flüssigkeitskanäle kommt das Warmwasser und/oder Kaltwasser zumindest in Teilbereichen mit dem Armaturengehäuse in Kontakt, sodass das Armaturengehäuse aus einem für Trinkwasser geeignetem Material, wie zum Beispiel Messing, bestehen muss. Die Herstellung derartiger Armaturengehäuse ist jedoch mit hohen Kosten verbunden.

Aufgabe der Erfindung ist es daher, die mit Bezug auf den Stand der Technik geschilderten Probleme zumindest teilweise zu lösen und insbesondere eine Thermostatmischarmatur anzugeben, bei der ein Kontakt von Flüssigkeiten mit dem Armaturengehäuse vermeidbar ist, sodass das Armaturengehäuse aus einem kostengünstigen Material herstellbar ist. Zudem soll ein Verfahren zur Herstellung einer Thermostatmischarmatur angegeben werden, durch das ein Kontakt von Flüssigkeiten mit einem Armaturengehäuse der Thermostatmischarmatur vermeidbar ist.

Diese Aufgaben werden gelöst mit einer Thermostatmischarmatur und einem Verfahren gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Thermostatmischarmatur bei, die zumindest Folgendes aufweist:
- ein Armaturengehäuse mit einem ersten Zulauf für eine erste Flüssigkeit und einem zweiten Zulauf für eine zweite Flüssigkeit,
- einen Thermostatmischer zum Mischen der ersten Flüssigkeit und der zweiten Flüssigkeit zu einem Mischwasser;
- einen ersten Flüssigkeitskanal, mittels dem die erste Flüssigkeit von dem ersten Zulauf zu dem Thermostatmischer führbar ist; und
- einen zweiten Flüssigkeitskanal, mittels dem die zweite Flüssigkeit von dem zweiten Zulauf zu dem Thermostatmischer führbar ist, wobei der zweite Flüssigkeitskanal zumindest teilweise von einem Ring umgeben ist, der einen Kontakt der zweiten Flüssigkeit mit dem Armaturengehäuse verhindert.

Die Thermostatmischarmatur dient insbesondere der bedarfsgerechten Bereitstellung eines Mischwassers an einem Waschbecken, einem Spülbecken, einer Dusche oder einer Badewanne. Hierzu kann an die Thermostatmischarmatur beispielsweise über einen flexiblen Schlauch und/oder eine Rohrleitung eine Brause, beispielsweise nach Art einer Handbrause oder Kopfbrause, anschließbar sein. Weiterhin weist die Thermostatmischarmatur einen Thermostatmischer auf, durch den eine erste Flüssigkeit mit einer ersten Temperatur (zum Beispiel Warmwasser mit einer Warmwassertemperatur) und eine zweite Flüssigkeit mit einer zweiten Temperatur (zum Beispiel Kaltwasser mit einer Kaltwassertemperatur) zu einem Mischwasser mit einer gewünschten Mischwassertemperatur mischbar sind. Die Mischwassertemperatur ist insbesondere durch ein Regelelement, beispielsweise nach Art eines Dehnstoffelements, des Thermostatmischers regelbar. Die erste Temperatur bzw. die Warmwassertemperatur beträgt insbesondere maximal 90 °C, bevorzugt 25 °C bis 90 °C, besonders bevorzugt 55 °C bis 65 °C und/oder die zweite Temperatur bzw. die Kaltwassertemperatur insbesondere maximal 25 °C (Celsius), bevorzugt 1 °C bis 25 °C, besonders bevorzugt 5 °C bis 20 °C. Der Thermostatmischer ist insbesondere in einem Armaturengehäuse der Thermostatmischarmatur angeordnet, mit dem die Thermostatmischarmatur an einem Träger, wie zum Beispiel einer Wand, befestigbar ist. Das Armaturengehäuse weist einen ersten Zulauf für die erste Flüssigkeit und einen zweiten Zulauf für die zweite Flüssigkeit auf. An den ersten Zulauf ist insbesondere eine Zuführleitung bzw. ein Zuführrohr für die erste Flüssigkeit und/oder an den zweiten Zulauf insbesondere eine Zuführleitung bzw. ein Zuführrohr für die zweite Flüssigkeit anschließbar.

Die erste Flüssigkeit ist von dem ersten Zulauf über einen ersten Flüssigkeitskanal dem Thermostatmischer zuführbar. Der erste Flüssigkeitskanal ist insbesondere zumindest teilweise in einer Flüssigkeitsführung ausgebildet, über den die erste Flüssigkeit dem Thermostatmischer insbesondere ohne Kontakt zu dem Armaturengehäuse zuführbar ist. Die Flüssigkeitsführung kann insbesondere zumindest teilweise zylinderförmig und/oder rohrförmig ausgebildet sein. Zudem kann die Kunststoffführung äußere Rippen aufweisen, durch die ein Kontakt der Flüssigkeitsführung zu dem Armaturengehäuse minimierbar ist. Weiterhin kann die Kunststoffführung zumindest teilweise aus Kunststoff bestehen und/oder als Kunststoffspritzgussteil ausgebildet sein. Die Flüssigkeitsführung ist bei der Herstellung der Thermostatmischarmatur insbesondere in einem Montageraum des Armaturengehäuses anordenbar bzw. in den Montageraum einsteckbar. Der Montageraum kann beispielsweise (im Wesentlichen) zylinderförmig ausgebildet sein und/oder sich entlang einer Längsachse des Armaturengehäuses erstrecken.

Die zweite Flüssigkeit ist von dem zweiten Zulauf über einen zweiten Flüssigkeitskanal dem Thermostatmischer zuführbar. Der zweite Flüssigkeitskanal ist insbesondere in dem Montageraum des Armaturengehäuses ausgebildet. Weiterhin können der erste Flüssigkeitskanal und der zweite Flüssigkeitskanal derart ausgebildet sein, dass sie sich innerhalb des Armaturengehäuses nicht kreuzen. Weiterhin ist der zweite Flüssigkeitskanal zumindest teilweise von einem Ring umgeben, der einen Kontakt der zweiten Flüssigkeit mit dem Armaturengehäuse verhindert. Der Ring kann, insbesondere parallel zu der Längsachse des Armaturengehäuses, eine Länge von beispielsweise 10 mm (Millimeter) bis 100 mm und/oder, insbesondere orthogonal zu der Längsachse des Armaturengehäuses, eine Wandstärke von beispielsweise 0,5 mm bis 5 mm aufweisen. Weiterhin kann der Ring einen (äußeren) Durchmesser von beispielsweise 30 mm bis 80 mm aufweisen. Zudem kann der Ring insbesondere zumindest teilweise verformbar, flexibel und/oder elastisch ausgebildet sein. Des Weiteren kann der Ring insbesondere zumindest teilweise aus Kunststoff oder Gummi bestehen. Beispielsweise kann es sich bei dem Ring um ein Kunststoffspritzgussteil handeln. Die Flüssigkeitsführung, der Thermostatmischer und/oder der Ring können derart in dem Montageraum des Armaturengehäuses angeordnet sein, dass diese untereinander nicht fest verbunden sind. Hierdurch können sich die Flüssigkeitsführung, der Thermostatmischer und/oder der Ring infolge unterschiedlicher Temperaturen unterschiedlich ausdehnen, ohne sich gegenseitig zu beschädigen. Der Ring ermöglicht die Ausbildung des Armaturengehäuses aus einem beliebigen und/oder kostengünstigen Material, wie zum Beispiel einer Zinklegierung. Hierdurch kann das Armaturengehäuse beispielsweise zumindest teilweise aus Zink-Druckguss bestehen.

Eine äußere Umfangsfläche des Rings kann eine innere Umfangsfläche des Armaturengehäuses kontaktieren. Dies kann insbesondere bedeuten, dass sich der Ring, insbesondere um 360°, entlang der inneren Umfangsfläche des Armaturengehäuses erstreckt. Weiterhin kann dies bedeuten, dass die gesamte äußere Umfangsfläche des Rings die innere Umfangsfläche des Armaturengehäuses kontaktiert.

Der zweite Flüssigkeitskanal kann zumindest teilweise ringförmig ausgebildet sein.

Der zweite Flüssigkeitskanal kann sich zumindest teilweise um den Thermostatmischer erstrecken. Dies kann insbesondere bedeuten, dass der Thermostatmischer den zweiten Flüssigkeitskanal, insbesondere innen, begrenzt.

Der Thermostatmischer kann sich durch den Ring erstrecken. Insbesondere kann sich der Thermostatmischer vollständig durch den Ring erstrecken. Weiterhin können der Thermostatmischer und der Ring (im Wesentlichen) konzentrisch zueinander angeordnet sein.

An einer äußeren Umfangsfläche des Rings kann ein Zulaufrohr ausgebildet sein, über das die zweite Flüssigkeit in den zweiten Flüssigkeitskanal strömen kann. Der Ring und das Zulaufrohr sind insbesondere einstückig ausgebildet. Weiterhin kann sich das Zulaufrohr insbesondere in eine radiale Richtung nach außen und/oder orthogonal zu der Längsachse des Armaturengehäuses erstrecken. Das Zulaufrohr kann beispielsweise eine Länge von 1 mm bis 20 mm und/oder einen Innendurchmesser von 5 mm bis 40 mm aufweisen. Weiterhin kann das Zulaufrohr beispielsweise eine Wandstärke von 0,5 mm bis 5 mm aufweisen.

Das Zulaufrohr kann sich zumindest teilweise in den zweiten Zulauf erstrecken.

Der Ring kann zur Anordnung in dem Armaturengehäuse zumindest teilweise elastisch verformbar sein. Dies kann insbesondere erforderlich sein, damit der Ring durch eine Montageöffnung des Armaturengehäuses in den Montageraum des Armaturengehäuses bewegbar ist. Insbesondere ist der Ring zumindest teilweise in einer radialen Richtung nach innen elastisch verformbar bzw. eindrückbar. Dies kann insbesondere bedeuten, dass der Außendurchmesser des Rings während der Anordnung des Rings in dem Armaturengehäuse zumindest teilweise reduzierbar ist. Weiterhin kann sich der Ring insbesondere selbstständig in seine ursprüngliche Form zurückstellen, beispielsweise wenn das Zulaufrohr bei der Anordnung des Rings in dem Armaturengehäuse den zweiten Zulauf des Armaturengehäuses erreicht bzw. mit diesem fluchtet.

Der Ring kann in das Armaturengehäuse eingespritzt sein. Dies kann beispielsweise mittels eines Spritzgussverfahrens erfolgen.

Einem weiteren Aspekt folgend wird auch ein Verfahren zur Herstellung einer Thermostatmischarmatur angegeben, das zumindest die folgenden Schritte aufweist:
a) Bereitstellen eines Armaturengehäuses mit einem ersten Zulauf für eine erste Flüssigkeit und einem zweiten Zulauf für eine zweite Flüssigkeit;
b) Anordnen einer Flüssigkeitsführung mit einem ersten Flüssigkeitskanal für die erste Flüssigkeit in dem Armaturengehäuse;
c) Verformen eines Rings und Anordnen des verformten Rings in dem Armaturengehäuse oder Einspritzen des Rings in das Armaturengehäuse, sodass der Ring einen zweiten Flüssigkeitskanal für die zweite Flüssigkeit zumindest teilweise umgibt und einen Kontakt der zweiten Flüssigkeit mit dem Armaturengehäuse verhindert; und
d) Anordnen eines Thermostatmischers zum Mischen der ersten Flüssigkeit und der zweiten Flüssigkeit zu einem Mischwasser in dem Armaturengehäuse, sodass die erste Flüssigkeit über den ersten Flüssigkeitskanal und die zweite Flüssigkeit über den zweiten Flüssigkeitskanal dem Thermostatmischer zuführbar sind.

Die Schritte b) bis d) können nacheinander oder zumindest teilweise gleichzeitig erfolgen. Weiterhin können die Schritte b) bis d) in unterschiedlicher Reihenfolge durchgeführt werden. Für weitere Einzelheiten des Verfahrens wird vollumfänglich auf die Beschreibung der Thermostatmischarmatur verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Thermostatmischarmatur in einem Längsschnitt;
- Fig. 2:: eine Flüssigkeitsführung der Thermostatmischarmatur in einem Längsschnitt;
- Fig. 3:: ein Thermostatmischer der Thermostatmischarmatur in einem Längsschnitt; und

- Fig. 4:: eine Teilansicht eines Armaturengehäuses der Thermostatmischarmatur mit einem Ring in einem perspektivischen Längsschnitt.

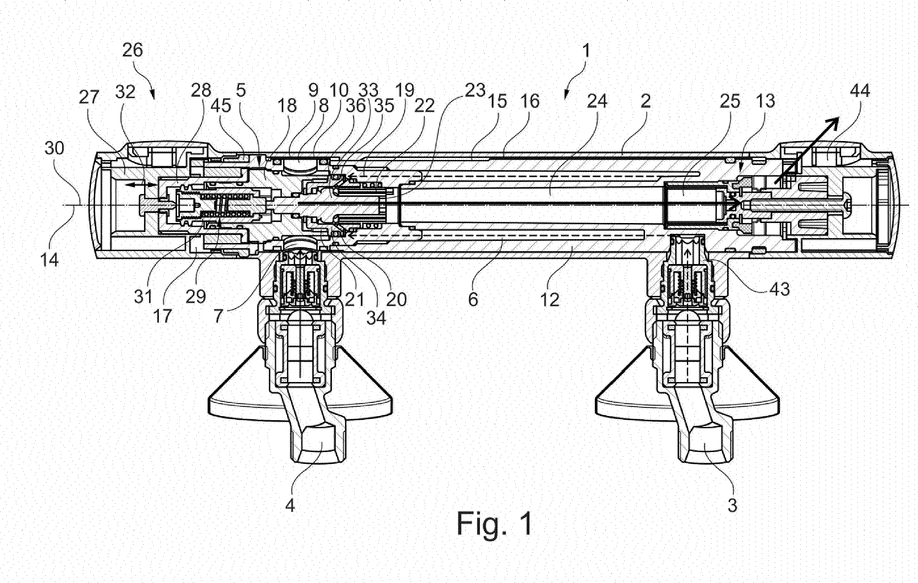

Die Fig. 1 zeigt eine Thermostatmischarmatur 1 in einem Längsschnitt. Die Thermostatmischarmatur 1 umfasst ein Armaturengehäuse 2 mit einem ersten Zulauf 3 für eine erste Flüssigkeit und einem zweiten Zulauf 4 für eine zweite Flüssigkeit. Bei der ersten Flüssigkeit handelt es sich um Warmwasser und bei der zweiten Flüssigkeit um Kaltwasser. In dem Armaturengehäuse 2 ist ein Thermostatmischer 5 angeordnet, der hier nach Art einer Thermostatmischkartusche ausgebildet ist. Der erste Zulauf 3 ist über einen ersten Flüssigkeitskanal 6 und der zweite Zulauf 4 über einen zweiten Flüssigkeitskanal 7 mit dem Thermostatmischer 5 verbunden, sodass die erste Flüssigkeit dem Thermostatmischer 5 über den ersten Flüssigkeitskanal 6 und die zweite Flüssigkeit dem Thermostatmischer 5 über den zweiten Flüssigkeitskanal 7 zuführbar sind. Die Strömungsrichtungen der ersten Flüssigkeit in dem ersten Flüssigkeitskanal 6 und der zweiten Flüssigkeit in dem zweiten Flüssigkeitskanal 7 sind in der Fig. 1 durch entsprechende Pfeile dargestellt. Der erste Flüssigkeitskanal 6 ist ringförmig in einer Flüssigkeitsführung 12 ausgebildet und verläuft (im Wesentlichen) parallel zu einer Längsachse 14 des Armaturengehäuses 2. Bei der Flüssigkeitsführung 12 handelt es sich um ein Kunststoffspritzgussteil. Weiterhin weist die Flüssigkeitsführung 12 auf einer Außenfläche 15 eine Mehrzahl von Rippen 16 auf, durch die eine Kontaktfläche der Flüssigkeitsführung 12 mit dem Armaturengehäuse 2 reduziert wird. Zwischen den Rippen 16 sind Luftpolster ausgebildet, durch die eine thermische Isolierung zwischen der Flüssigkeitsführung 12 und dem Armaturengehäuse 2 erzeugt wird. Der zweite Flüssigkeitskanal 7 erstreckt sich ringförmig um den Thermostatmischer 5 und ist durch einen Ring 8 umgeben, der einen Kontakt der zweiten Flüssigkeit mit dem Armaturengehäuse 2 im Bereich des zweiten Flüssigkeitskanals 7 verhindert. Der Ring 8 und der Thermostatmischer 5 sind konzentrisch zu der Längsachse 14 des Armaturengehäuses 2 angeordnet. Weiterhin kontaktiert der Ring 8 mit seiner äußeren Umfangsfläche 9 eine innere Umfangsfläche 10 eines Montageraums 17 des Armaturengehäuses 2.

Durch den Thermostatmischer 5 sind die erste Flüssigkeit und die zweite Flüssigkeit zu einem Mischwasser mit einer Mischwassertemperatur mischbar. Der Thermostatmischer 5 weist ein Kartuschengehäuse 19 mit einem Kartuschenkopfstück 18 auf, das (im Wesentlichen) rohrförmig ausgebildet ist und sich entlang der Längsachse 14 des Thermostatmischers 5 bzw. des Armaturengehäuses 2 erstreckt. In dem Kartuschenkopfstück 18 ist zumindest ein erster Einlass 20 für die erste Flüssigkeit und zumindest ein zweiter Einlass 21 für die zweite Flüssigkeit ausgebildet. Die hier gezeigte Ausführungsvariante des Thermostatmischers 5 weist eine Mehrzahl von ersten Einlässen 20 und zweiten Einlässen 21 auf, die in einer Umfangsrichtung um die Längsachse 14 in dem Kartuschenkopfstück 18 verteilt angeordnet sind. Über die ersten Einlässe 20 ist die erste Flüssigkeit und über die die zweiten Einlässe 21 ist die zweite Flüssigkeit in eine Mischkammer 22 des Thermostatmischers 5 führbar. Somit ist die Mischkammer 22 den ersten Einlässen 20 und zweiten Einlässen 21 in einer Strömungsrichtung der ersten Flüssigkeit und zweiten Flüssigkeit nachgeordnet. In der Mischkammer 22 sind die erste Flüssigkeit und die zweite Flüssigkeit zu einem Mischwasser mit einer Mischwassertemperatur mischbar. Der Mischkammer 22 ist in Strömungsrichtung des Mischwassers ein Mischwasserauslass 23 nachgeordnet, durch den das Mischwasser mit der Mischwassertemperatur den Thermostatmischer 5 verlassen kann. Von dem Mischwasserauslass 23 ist das Mischwasser über einen Mischwasserkanal 24 der Flüssigkeitsführung 12 einem Ventil 13 zuführbar, mit dessen Ventilkörper 25 eine Abgabe des Mischwassers aus der Thermostatmischarmatur 1 steuerbar ist. Der Mischwasserkanal 24 erstreckt sich parallel zu der Längsachse 14 durch den ersten Flüssigkeitskanal 6. Ein Strömungsverlauf des Mischwassers ist in der Fig. 1 mit entsprechenden Pfeilen dargestellt.

Die Mischwassertemperatur des Mischwassers wird durch ein Mischungsverhältnis zwischen der ersten Flüssigkeit und der zweiten Flüssigkeit bestimmt. Zur Einstellung der Mischwassertemperatur weist der Thermostatmischer 5 ein Stellelement 26 auf. Das Stellelement 26 umfasst einen Betätigungsgriff 27, der verdrehfest mit einer Reguliermutter 28 einer Überlasteinheit 29 verbunden ist. Der Betätigungsgriff 27 ist somit mit der Reguliermutter 28 um eine Drehachse 30 drehbar, die hier mit der Längsachse 14 fluchtet. Beim Drehen des Betätigungsgriffs 27 wird eine Federhülse 31 in einer axialen Richtung 32, d. h. parallel zu der Längsachse 14, verstellt. Die Bewegung der Federhülse 31 in die axiale Richtung 32 wird auf ein Regelelement 33 übertragen, das wiederum einen Regelschieber 34 in der axialen Richtung 32 bewegt. Je nach Position des Regelschiebers 34 in der axialen Richtung 32 kann der Regelschieber 34 einen ersten Regelspalt 35 für die erste Flüssigkeit und einen zweiten Regelspalt 36 für die zweite Flüssigkeit wechselweise öffnen und schließen. Je nach Position des Regelschiebers 34 wird eine entsprechende Menge der ersten Flüssigkeit und der zweiten Flüssigkeit in den Thermostatmischer 5 durch den ersten Regelspalt 35 und zweiten Regelspalt 36 geleitet, woraus das Mischwasser mit einer entsprechenden Mischwassertemperatur gemischt wird. Das Regelelement 33 kann zumindest teilweise aus einem Wärmeausdehnungsmaterial bestehen. Hierdurch dehnt sich das Regelelement 33 insbesondere in die axiale Richtung 32 aus, wenn es erwärmt wird, und zieht sich insbesondere in die axiale Richtung 32 zusammen, wenn es abgekühlt wird. Dadurch kann das Regelelement 33 das Mischwasser auf einer (im Wesentlichen) konstanten Mischwassertemperatur halten. Strömt beispielsweise zu viel der ersten Flüssigkeit (Warmwasser) oder zu wenig der zweiten Flüssigkeit (Kaltwasser) in den Thermostatmischer 5, erwärmt und dehnt sich das Regelelement 33, wodurch es den Regelschieber 34 in der axialen Richtung 32 in Richtung des Mischwasserauslasses 23 verstellt, sodass der erste Regelspalt 35 verkleinert und der zweite Regelspalt 36 vergrößert werden. Somit strömt weniger der ersten Flüssigkeit und mehr der zweiten Flüssigkeit in die Mischkammer 22. Strömt beispielsweise zu viel der zweiten Flüssigkeit (Kaltwasser) oder zu wenig der ersten Flüssigkeit (Warmwasser) in den Thermostatmischer 5, zieht sich das Regelelement 33 zusammen, wodurch es den Regelschieber 34 vom Mischwasserauslass 23 wegbewegt, sodass der erste Regelspalt 35 vergrößert und der zweite Regelspalt 36 verkleinert wird. Somit strömt mehr der ersten Flüssigkeit und weniger der zweiten Flüssigkeit in die Mischkammer 22.

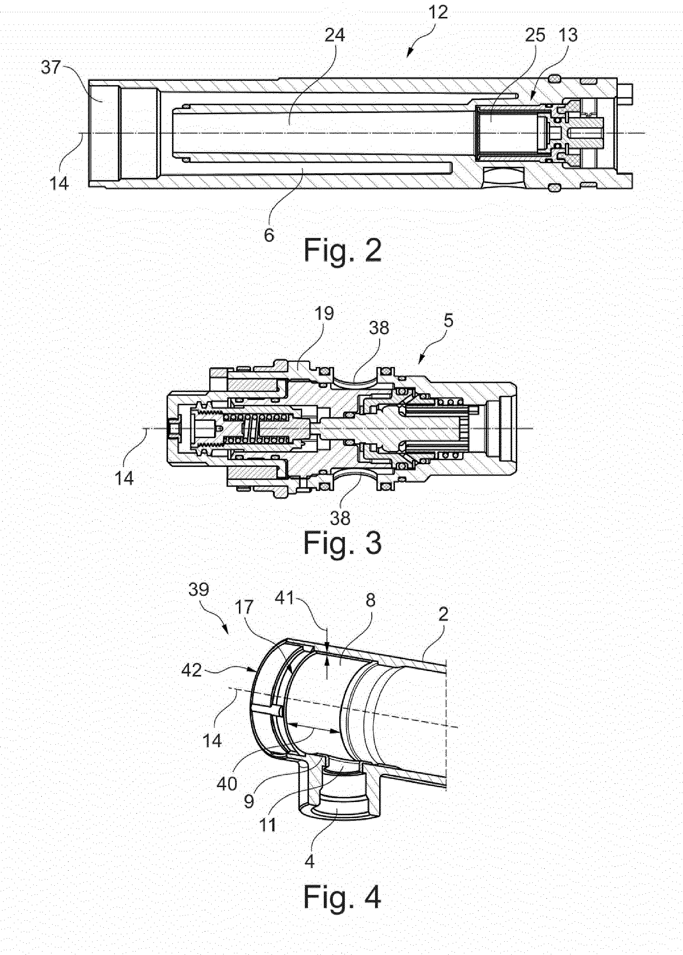

Die Fig. 2 zeigt die Flüssigkeitsführung 12 der in der Fig. 1 gezeigten Thermostatmischarmatur 1 in einem Längsschnitt. Zu erkennen ist hier insbesondere, dass sich der Mischwasserkanal 24 rohrförmig und parallel zu der Längsachse 14 durch den ersten Flüssigkeitskanal 6 bis zu dem Ventilkörper 25 des Ventils 13 erstreckt. Die Flüssigkeitsführung 12 weist an einem längsseitigen Ende eine Aufnahme 37 auf, in die der in den Fig. 1 und 3 gezeigte Thermostatmischer 5 parallel zu der Längsachse 14 einsteckbar ist.

Die Fig. 3 zeigt den Thermostatmischer 5 in einem Längsschnitt. Das Kartuschengehäuse 19 weist hier nicht sichtbare Öffnungen für die erste Flüssigkeit sowie Öffnungen 38 für die zweite Flüssigkeit auf. Die Öffnungen 38 erstrecken sich orthogonal zu der Längsachse 14 in den Thermostatmischer 5.

Die Fig. 4 zeigt ein erstes längsseitiges Ende 39 des Armaturengehäuse 2 im Bereich des Rings 8 in einem Längsschnitt. Der Ring 8 weist parallel zu der Längsachse 14 eine Länge 40 und orthogonal zu der Längsachse 14 eine Wandstärke 41 auf. Zudem weist der Ring 8 ein Zulaufrohr 11 auf, das sich von der äußeren Umfangsfläche 9 des Rings 8 in einer radialen Richtung nach außen bzw. orthogonal zu der Längsachse 14 in den zweiten Zulauf 4 des Armaturengehäuses 2 erstreckt. Um den Ring 8 bei der Herstellung der in der Fig. 1 gezeigten Thermostatmischarmatur 1 über eine Montageöffnung 42 an dem ersten längsseitigen Ende 39 des Armaturengehäuses 2 in dem Montageraum 17 des Armaturengehäuses 2 anordnen zu können, ist der Ring 8 elastisch verformbar ausgebildet. Dadurch konnte ein Teil des Rings 8 vor seiner Anordnung in dem Armaturengehäuse 2 radial nach innen gedrückt und anschließend in einem elastisch verformten Zustand über die Montageöffnung 42 in das Armaturengehäuse 2 eingeschoben werden. Sobald das Zulaufrohr 11 des Rings 8 den zweiten Zulauf 4 erreicht, rastet das Zulaufrohr 11 in den zweiten Zulauf 4 ein, sodass sich der Ring 8 in seine ursprüngliche Form zurückstellt. Der Ring 8 ist dadurch gegen ein Herausfallen aus dem Armaturengehäuse 2 gesichert. Anschließend kann die in der Fig. 2 gezeigte Flüssigkeitsführung 12 über ein dem ersten längsseitigen Ende 39 gegenüberliegendes zweites längsseitiges Ende des Armaturengehäuses 2 in dem Montageraum 17 des Armaturengehäuses 2 angeordnet werden. Die Flüssigkeitsführung 12 wird durch einen in der Fig. 1 gezeigten Zulaufnippel 43 des ersten Zulaufs 3 und einen Brausenippel 44 fixiert. Anschließend kann der in der Fig. 3 gezeigte Thermostatmischer 5 in die in der Fig. 2 gezeigte Aufnahme 37 der Flüssigkeitsführung 2 gesteckt und mit einer in der Fig. 1 gezeigten Mutter 45 in dem Montageraum 17 des Armaturengehäuses 2 gesichert werden.

Durch die vorliegende Erfindung ist das Armaturengehäuse 2 durch ein beliebiges Material und damit kostengünstiger herstellbar.

### Bezugszeichenliste

- 1: Thermostatmischarmatur
- 2: Armaturengehäuse
- 3: erster Zulauf
- 4: zweiter Zulauf
- 5: Thermostatmischer
- 6: erster Flüssigkeitskanal
- 7: zweiter Flüssigkeitskanal
- 8: Ring
- 9: äußere Umfangsfläche
- 10: innere Umfangsfläche
- 11: Zulaufrohr
- 12: Flüssigkeitsführung
- 13: Ventil
- 14: Längsachse
- 15: Außenfläche
- 16: Rippen
- 17: Montageraum
- 18: Kartuschenkopfstück
- 19: Kartuschengehäuse
- 20: erster Einlass
- 21: zweiter Einlass
- 22: Mischkammer
- 23: Mischwasserauslass
- 24: Mischwasserkanal
- 25: Ventilkörper
- 26: Stellelement
- 27: Betätigungsgriff
- 28: Reguliermutter
- 29: Überlasteinheit
- 30: Drehachse
- 31: Federhülse
- 32: axiale Richtung
- 33: Regelelement
- 34: Regelschieber
- 35: erster Regelspalt
- 36: zweiter Regelspalt
- 37: Aufnahme
- 38: Öffnung
- 39: erstes längsseitiges Ende
- 40: Länge
- 41: Wandstärke
- 42: Montageöffnung
- 43: Zulaufnippel
- 44: Brausenippel
- 45: Mutter

## Patentansprüche

1. Thermostatmischarmatur (1), zumindest aufweisend:
- ein Armaturengehäuse (2) mit einem ersten Zulauf (3) für eine erste Flüssigkeit und einem zweiten Zulauf (4) für eine zweite Flüssigkeit,
- einen Thermostatmischer (5) zum Mischen der ersten Flüssigkeit und der zweiten Flüssigkeit zu einem Mischwasser;
- einen ersten Flüssigkeitskanal (6), mittels dem die erste Flüssigkeit von dem ersten Zulauf (3) zu dem Thermostatmischer (5) führbar ist; und
- einen zweiten Flüssigkeitskanal (7), mittels dem die zweite Flüssigkeit von dem zweiten Zulauf (4) zu dem Thermostatmischer (5) führbar ist, wobei der zweite Flüssigkeitskanal (7) zumindest teilweise von einem Ring (8) umgeben ist, der einen Kontakt der zweiten Flüssigkeit mit dem Armaturengehäuse (2) verhindert.

2. Thermostatmischarmatur (1) nach Patentanspruch 1, wobei eine äußere Umfangsfläche (9) des Rings (8) eine innere Umfangsfläche (10) des Armaturengehäuses (2) kontaktiert.

3. Thermostatmischarmatur (1) nach einem der vorhergehenden Patentansprüche, wobei der zweite Flüssigkeitskanal (7) zumindest teilweise ringförmig ausgebildet ist.

4. Thermostatmischarmatur (1) nach einem der vorhergehenden Patentansprüche, wobei sich der zweite Flüssigkeitskanal (7) zumindest teilweise um den Thermostatmischer (5) erstreckt.

5. Thermostatmischarmatur (1) nach einem der vorhergehenden Patentansprüche, wobei sich der Thermostatmischer (5) durch den Ring (8) erstreckt.

6. Thermostatmischarmatur (1) nach einem der vorhergehenden Patentansprüche, wobei an einer äußeren Umfangsfläche (9) des Rings (8) ein Zulaufrohr (11) ausgebildet ist, über das die zweite Flüssigkeit in den zweiten Flüssigkeitskanal (7) strömen kann.

7. Thermostatmischarmatur (1) nach Patentanspruch 6, wobei sich das Zulaufrohr (11) zumindest teilweise in den zweiten Zulauf (4) erstreckt.

8. Thermostatmischarmatur (1) nach einem der vorhergehenden Patentansprüche, wobei der Ring (8) zur Anordnung in dem Armaturengehäuse (2) zumindest teilweise elastisch verformbar ist.

9. Thermostatmischarmatur (1) nach einem der Patentansprüche 1 bis 7, wobei der Ring (8) in das Armaturengehäuse (2) eingespritzt ist.

10. Verfahren zur Herstellung einerThermostatmischarmatur (1), zumindest aufweisend die folgenden Schritte:
a) Bereitstellen eines Armaturengehäuses (2) mit einem ersten Zulauf (3) für eine erste Flüssigkeit und einem zweiten Zulauf (4) für eine zweite Flüssigkeit;
b) Anordnen einer Flüssigkeitsführung (12) mit einem ersten Flüssigkeitskanal (6) für die erste Flüssigkeit in dem Armaturengehäuse (2);
c) Verformen eines Rings (8) und Anordnen des verformten Rings (8) in dem Armaturengehäuse (2) oder Einspritzen des Rings (8) in das Armaturengehäuse (2), sodass der Ring (8) einen zweiten Flüssigkeitskanal (7) für die zweite Flüssigkeit zumindest teilweise umgibt und einen Kontakt der zweiten Flüssigkeit mit dem Armaturengehäuse (2) verhindert; und
d) Anordnen eines Thermostatmischers (5) zum Mischen der ersten Flüssigkeit und der zweiten Flüssigkeit zu einem Mischwasser in dem Armaturengehäuse (2), sodass die erste Flüssigkeit über den ersten Flüssigkeitskanal (6) und die zweite Flüssigkeit über den zweiten Flüssigkeitskanal (7) dem Thermostatmischer (5) zuführbar sind.
